# FASCICULE DE BREVET EUROPEEN

(11) **EP 3 332 537 B1**
(45) Date de publication et mention de la délivrance du brevet: **05.06.2019**
(21) Numéro de dépôt: 16750954.6
(22) Date de dépôt: 13.07.2016
(51) Int. Cl.: G06F 8/654, H04L 29/08, H04L 29/06

(54) **PROCÉDÉ DE TÉLÉCHARGEMENT DE LOGICIEL POUR DES CALCULATEURS PAR RÉSEAU À MULTIPLEXAGE TEMPOREL**
VERFAHREN ZUM HERUNTERLADEN VON SOFTWARE FÜR COMPUTER ÜBER EIN ZEITMULTIPLEXNETZWERK
METHOD FOR DOWNLOADING SOFTWARE FOR COMPUTERS VIA A TIME-DIVISION MULTIPLEXING NETWORK

(30) Priorité: 03.08.2015 FR 1557452
(43) Date de publication de la demande: 13.06.2018
(73) Titulaire: PSA Automobiles SA, 78300 Poissy (FR)
(72) Inventeur: SCHMIDT, Pierre, 95240 Cormeilles En Parisis (FR); LOPEZ, Thierry, 78700 Conflans Ste Honorine (FR); PREUVOT, Pascal, 77400 Thorigny Sur Marne (FR)
(86) Numéro de dépôt international: PCT/FR2016/051803
(87) Numéro de publication internationale: WO 2017/021606

(56) Documents cités:
- EP-A1- 2 337 271
- DE-A1-102005 033 830
- DE-A1-102011 005 088

## Description

La présente invention concerne un procédé de téléchargement de logiciel pour des calculateurs par réseau à multiplexage temporel avec une optimisation de la performance de téléchargement. La présente invention permet de disposer de davantage de bande passante pour le téléchargement de logiciels pour des calculateurs connectés à un réseau de technologie multiplexage temporel à haut débit sans changer ni la nature, ni la configuration de ce réseau.

Les calculateurs peuvent se trouver embarqués dans un véhicule quelconque, notamment mais pas uniquement dans un véhicule automobile. Par véhicule il est entendu tout engin mobile, par exemple une voiture, un camion, un véhicule utilitaire ou un véhicule de chantier, un engin deux roues, un bateau ou un avion, etc... Dans ce qui va suivre, il sera fait référence à un véhicule automobile, ce qui est une application préférentielle de la présente invention, sans que cela soit limitatif.

La complexité croissante des fonctions électroniques embarquées dans un véhicule entraîne une multiplication des calculateurs sous forme de boîtiers électroniques. Par exemple, pour des véhicules automobiles, afin de limiter la diversité qui en résulte, il a été décidé de pratiquer un téléchargement de ces calculateurs dans le flux de production.

L'opération peut être réalisée par l'intermédiaire d'un outil débarqué, donc se positionnant à l'extérieur du véhicule, qui se connecte sur une prise diagnostic et permet de programmer dans la mémoire du ou des calculateurs le logiciel qui assure un pilotage conforme de la fonctionnalité associée à un calculateur spécifique en prenant en compte les caractéristiques, notamment la motorisation ou les options propres à ce véhicule.

Or le volume de ces logiciels augmentant sans cesse, les constructeurs automobiles ont été amenés à proposer un réseau haut débit comme solution au déficit de bande passante de la technologie d'un réseau local de commande auparavant largement utilisé dans le domaine des véhicules automobiles. Ceci est fait dans le but de contenir l'opération de téléchargement dans le temps imparti à la réalisation de cette opération dans le flux de production.

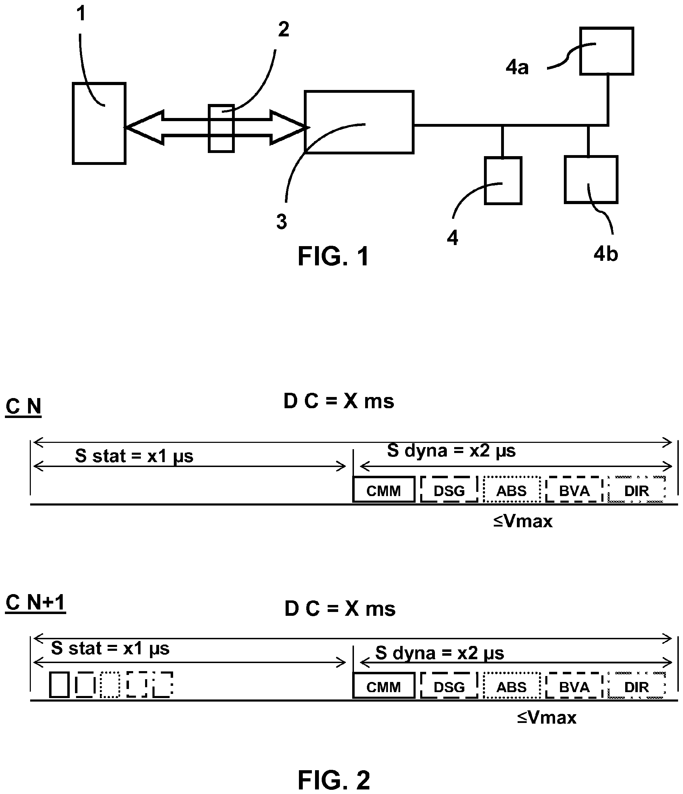

La figure 1 montre un système de téléchargement pour des calculateurs embarqués dans un véhicule automobile, ce système étant connu de l'état de la technique. Un tel système comprend un outil de production 1, disposé à l'extérieur du véhicule, par exemple dans l'atelier de production ou dans un atelier de service après-vente. Cet outil de production 1 s'apparente à un ordinateur et est relié à un premier réseau à protocole de réseau local à commutation de paquets ou réseau Ethernet. Ce réseau local est connecté avec des calculateurs 4, 4a, 4b embarqués dans le véhicule automobile, avantageusement via une passerelle 3 reliée au réseau local issu d'une prise diagnostic 2 du véhicule où vient se raccorder l'outil de production 1.

A l'intérieur du véhicule, il est prévu un second réseau qui est du type à multiplexage temporel définissant des cycles de communication successifs pour assurer la communication de l'outil de production 1 avec les calculateurs 4, 4a, 4b. Cette communication se fait par l'intermédiaire d'une passerelle 3 pouvant se trouver embarquée, cette passerelle assurant la liaison entre l'outil de production 1 et son réseau local et le ou les calculateurs 4, 4a, 4b dans un réseau à multiplexage temporel. Un tel réseau multiplexé peut être un réseau connu sous l'appellation anglo-saxonne de «Flexray».

Les calculateurs 4, 4a, 4b sont dédiés à une fonctionnalité spécifique présente dans le véhicule. On pourra mentionner sans être limitatif un calculateur dédié pour le contrôle moteur ou CMM, un calculateur pour un système d'antiblocage des roues ou ABS ou pour un électrostabilisateur programmé ou ESP, une boîte de vitesses automatique ou BVA, etc.

En complément d'un débit largement supérieur à un réseau local de commande connu aussi sous la dénomination de CAN, à savoir 500kbps contre 10Mbps pour un réseau à multiplexage temporel, cette dernière technologie de réseau à multiplexage temporel a été retenue pour les liaisons avec les calculateurs par de nombreux constructeurs automobiles. En revanche, il n'est pas prévu d'introduire cette technologie dans un outil de production 1 qui n'est au final qu'un ordinateur renforcé mécaniquement et disposant donc de base d'un port Ethernet standard répondant aux critères de débit du réseau à multiplexage temporel embarqué dans le véhicule.

Ce choix technologique du côté de l'outil de production 1 est de plus justifié par les normes de communication de diagnostic au travers d'un protocole Internet faisant appel à la technologie Ethernet qui sera autorisée pour le diagnostic réglementaire dans un proche avenir.

Le fait de prévoir une passerelle 3 reliant le premier réseau local, avantageusement Ethernet, à un second réseau à multiplexage temporel permet de convertir les trames initiales locales transmises par l'outil de production 1 en trames modifiées et conformées pour un tel second réseau à multiplexage temporel à destination du ou des calculateurs 4, 4a, 4b à mettre à jour. Réciproquement les réponses des calculateurs 4, 4a, 4b sont reçues par la passerelle 3 puis remontées à l'outil de production 1 sous la forme de trames locales, avantageusement Ethernet.

La technologie de réseau à multiplexage temporel engendre cependant les problématiques suivantes. En premier, la nature déterministe du réseau à multiplexage temporel ne permet pas l'optimisation de la durée de transmission des trames intervenant dans la fonction de téléchargement. Contrairement à un réseau local de commande du type CAN, un réseau à multiplexage temporel fait appel pour son fonctionnement à une notion de cycles dont la durée est fixée à la conception du réseau et ne peut être modifiée ultérieurement.

Il est fréquent qu'un tel paramétrage du réseau n'autorise que l'envoi d'une trame de 128 octets utiles avec un cycle par exemple de 1,7ms vers un calculateur donné. Or, les calculateurs les plus complexes, principalement celui du contrôle moteur ou de la boîte de vitesses, bénéficiant des avancées technologiques les plus notables, sont préférentiellement à télécharger via des blocs supérieurs à 128 octets.

Pour des raisons évidentes de temps de programmation en ligne chez les constructeurs automobiles généralistes contraints à de fortes cadences de production, il est fréquent que seule une zone occupant un quart de la mémoire totale soit reprogrammée. C'est cette zone, appelée calibration, qui porte l'essentiel de la diversité et permet donc les gains sur l'approvisionnement de l'équipement électronique associée au calculateur livré, dans lequel on mettra la bonne calibration.

Compte tenu de la remarque précédente et du paramétrage du réseau à multiplexage temporel, des calibrations d'un ordre de grandeur de 8Mo peuvent être téléchargées pendant la production d'un véhicule. Il apparaît cependant depuis peu, un besoin grandissant de pouvoir télécharger l'ensemble du logiciel applicatif ainsi que la calibration d'un calculateur dans le flux de production d'un véhicule.

Cela permettrait, d'une part, de réduire d'avantage encore la diversité de l'approvisionnement en équipements électroniques. Le logiciel applicatif étant téléchargé dans le flux de production, le même équipement électronique pourra ainsi être monté sur un plus grand nombre de véhicules de modèle différent. D'autre part, cela permettrait de gagner le temps d'approvisionnement, qui atteint parfois deux mois du fait d'un transport maritime, des calculateurs entre le fournisseur et l'usine de production du constructeur automobile.

Le logiciel applicatif accompagné de sa calibration pouvant occuper la totalité de la mémoire d'un calculateur, soit de l'ordre de 16Mo ou 16 Mégaoctets pour un calculateur de contrôle moteur ou CMM, le paramétrage du réseau à multiplexage temporel tel que défini actuellement ne permet pas de répondre à ce besoin de téléchargement complet du logiciel.

Le document FR-A-2719924 décrit un procédé et un système de téléchargement de fichiers dans des calculateurs embarqués à bord de véhicules automobiles, tels que ceux décrits précédemment.

De même le document FR-A-2825813 décrit une optimisation d'un téléchargement afin de le rendre compatible avec des exigences du flux de fabrication des véhicules avec des téléchargements sur divers calculateurs réalisés simultanément.

On connait encore le document DE2011005088A1 correspondant au préambule de la revendication 1.

Cependant, les nouvelles fonctionnalités embarquées poussent à des tailles mémoires embarquées et des besoins en temps de téléchargement de ces mémoires de plus en plus grands.

Par conséquent, le problème à la base de l'invention est de proposer un procédé et un système de téléchargement de logiciels applicatifs à mémoriser dans des calculateurs embarqués dans un véhicule par envoi de données via un réseau local connecté à un réseau à multiplexage temporel, ces procédé et système tenant compte des spécificités du réseau à multiplexage temporel et permettant d'augmenter la performance ou le débit utile des téléchargements afin de satisfaire au besoin du téléchargement dans la mémoire complète de chaque calculateur, même le plus performant actuellement et présentant un logiciel d'application lourd.

Pour atteindre cet objectif, il est prévu selon l'invention un procédé pour le téléchargement de requêtes d'écriture de données logicielles applicatives dans au moins une mémoire d'un ou plusieurs calculateurs, les requêtes d'écriture étant transmises au ou aux calculateurs en trames initiales dans un premier réseau local, puis, après conversion en trames modifiées, dans un second réseau à multiplexage temporel présentant plusieurs canaux de communication, chaque canal étant attribué à un calculateur, ce second réseau étant paramétré selon un cycle de communication répétitif, ce cycle de communication comprenant l'envoi d'une trame modifiée par canal, caractérisé en ce que :
- pour la conversion, on segmente les trames initiales en trames modifiées contenant chacune un nombre d'octets inférieur ou égal à un nombre maximal admissible par le canal associé au calculateur dans le second réseau,
- quand il existe durant le cycle de communication un ou plusieurs canaux libres soit parce que les requêtes d'écritures destinées à un ou plusieurs calculateurs sont terminées, les canaux libres sont réattribués au ou aux calculateurs restants en cours de téléchargement pour l'envoi de trames modifiées supplémentaires,
- on recompose dans le ou les calculateurs restants la requête d'écriture lui ou leur étant destinées par regroupement des trames modifiées et écriture en mémoire des données logicielles.

L'effet technique est d'obtenir une adaptation facilitée de trames initiales en trames modifiées conformées à un réseau à multiplexage temporel en permettant l'utilisation du ou des canaux de communication libres ou bien ayant été initialement attribués à un calculateur ayant mémorisé son logiciel, pour l'envoi de trames modifiées à un autre calculateur n'ayant pas encore téléchargé son logiciel applicatif en complément des trames modifiées qui lui sont envoyées par son propre canal de communication, ce qui raccourcit le temps de téléchargement de son logiciel applicatif.

Ceci est particulièrement intéressant dans le cas d'un véhicule se trouvant sur une chaîne de montage lors de sa fabrication pour lequel on ne dispose que d'un temps limité pour le téléchargement d'un logiciel applicatif dans un calculateur.

La présente invention propose donc une solution permettant de segmenter une requête d'écriture en plusieurs trames modifiées en étant conformées au réseau à multiplexage temporel. Cette segmentation tient compte des paramètres de fonctionnement du réseau en délivrant des trames ne dépassant pas un nombre maximal d'octets qui est toléré par trame. Ensuite, la recomposition de la requête d'écriture se fait dans le calculateur par regroupement des trames modifiées avant l'écriture en mémoires des données transportées par la requête.

Avantageusement, le second réseau à multiplexage temporel est à communication par bus, périodiquement partagé pendant un cycle, entre un segment statique et un segment dynamique, l'envoi simultané de trames modifiées pour le ou les calculateurs en cours de téléchargement n'étant possible que dans le segment dynamique.

Avantageusement, le nombre de calculateur est de cinq. ce qui est un optimum au regard du cycle de communication.

Avantageusement, quand chaque calculateur reçoit une trame modifiée, il est procédé à l'identification si cette trame finalise une requête d'écriture complète ou comme faisant partie d'une requête d'écriture non encore complète, cette identification étant suivie dans le premier cas par une écriture en mémoire dans le calculateur et dans le second cas, par l'attente des trames modifiées non encore parvenues au calculateur pour la recomposition de la requête d'écriture.

Avantageusement, lors de la conversion, il est mesuré le nombre d'octets total de chaque requête d'écriture pour chaque calculateur et il est généré autant de trames modifiées segmentant cette requête d'écriture qu'il n'en faut pour contenir l'ensemble des octets de chaque requête d'écriture, le nombre de trames générées dépendant du nombre maximal d'octets admissible par trame modifiée.

Avantageusement, lors de la recomposition de la requête d'écriture dans un calculateur, il est procédé pour chaque requête d'écriture à une comparaison entre le nombre total d'octets de la requête d'écriture en tant que total des données attendues et le nombre d'octets des trames modifiées ayant déjà été reçues et segmentant la requête d'écriture en tant que total des données reçues et, si ces deux nombres d'octets sont égaux, il en est déduit que la requête d'écriture a été complètement reçue par le calculateur et il est procédé à son écriture en mémoire, tandis que si le nombre total d'octets de la requête d'écriture attendu est supérieur au nombre total d'octets des trames modifiées reçues, la recomposition de la requête d'écriture est en attente de réception de nouvelles trames jusqu'à ce que la longueur attendue soit égale au nombre total d'octets des trames modifiées reçues.

Avantageusement, il est émis vers chaque calculateur devant être téléchargé, une première requête de téléchargement dans laquelle est indiqué le nombre total d'octets qui devront être téléchargés, le calculateur indiquant en retour le nombre maximal prédéterminé d'octets par la requête d'écriture transmise par un outil d'équipement.

Avantageusement, pour chaque requête d'écriture associée à un calculateur, il est procédé :
- au calcul d'un nombre d'octets restant à recevoir,
- au calcul d'un nombre d'octets transportés comme étant le minimum entre le nombre d'octets restant à recevoir et le nombre maximal prédéterminé d'octets par requête d'écriture,
- à la comparaison du nombre d'octets transportés par requête d'écriture avec le nombre d'octets déjà reçus en additionnant les octets des trames modifiées déjà reçues par le calculateur,
- avec, si le nombre d'octets déjà reçus est égal au nombre d'octets transportés, détermination que les trames modifiées déjà reçues contiennent l'intégralité de la requête d'écriture, auquel cas il est procédé à l'écriture dans la mémoire du calculateur des données de la requête d'écriture, ou
- si au contraire le nombre d'octets déjà reçus est inférieur au nombre d'octets total transportés par la requête d'écriture, détermination que les trames modifiées reçues ne contiennent pas l'intégralité de la requête d'écriture, auquel cas la recomposition de la requête d'écriture est continuée en attente de l'arrivée de nouvelles trames.

Avantageusement, le premier réseau est hors véhicule tandis que le second réseau ainsi que le ou les calculateurs est embarqués dans un véhicule.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'un système de téléchargement selon l'état de la technique, des éléments de mise en oeuvre du procédé de téléchargement selon la présente invention pouvant être intégrés dans la passerelle et le chargeur d'amorçage de chaque calculateur de ce système,
- la figure 2 est une représentation schématique de deux cycles successifs d'un réseau à multiplexage temporel, aucun téléchargement d'un logiciel pour un calculateur n'ayant été finalisé pour ces deux cycles,
- la figure 3 est une représentation schématique de deux autres cycles successifs d'un réseau à multiplexage temporel, un téléchargement d'un logiciel pour un calculateur ayant été terminé et le canal de communication dans la bande passante du réseau du calculateur ayant fini son téléchargement étant réaffecté à l'envoi de trames à un calculateur en supplément des trames envoyées par son propre canal, ce calculateur étant celui dont la durée de téléchargement est considérée comme la plus longue, ceci selon un procédé conforme à la présente invention,
- la figure 4 est une représentation schématique de durées imparties pour l'opération de téléchargement de divers calculateurs embarqués,
- la figure 5 est une représentation schématique de la composition d'un chargeur d'amorçage d'un calculateur pour la mise en oeuvre d'un procédé conforme à la présente invention ou faisant partie d'un système selon la présente invention, le chargeur d'amorçage présentant une couche de recomposition spécifique à la présente invention,
- la figure 6 montre deux trames successives conformées au second réseau qui ont été segmentées conformément à un procédé de téléchargement selon la présente invention,
- la figure 7 montre la recomposition par le calculateur d'une requête d'écriture à partir des trames reçues via le second réseau, la première trame reçue comportant la taille totale des données transportées par la requête conformément au procédé de téléchargement selon la présente invention,
- la figure 8 montre la communication entre l'outil débarqué et le chargeur d'amorçage d'un calculateur conformément au procédé de téléchargement de la présente invention,
- la figure 9 montre à l'instar de la figure 7 une variante de la recomposition par le calculateur d'une requête d'écriture à partir des trames reçues via le second réseau et ne comportant pas dans leur entête la taille totale des données transportées par la requête.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différents éléments illustrés ne sont pas représentatives de la réalité.

D'une manière générale, la présente invention consiste, d'une part, à ajouter une couche logicielle embarquée dans un chargeur d'amorçage d'au moins un calculateur dite couche de recomposition, cette couche permettant de répondre au besoin du téléchargement de la mémoire complète de ce calculateur dans le flux de production d'un véhicule à temps contraint, ceci sans modifier le paramétrage du réseau à multiplexage temporel servant de support à ce téléchargement. D'autre part, la présente invention consiste à ajouter une fonction de segmentation des trames du réseau à multiplexage temporel dans la passerelle de conversion des trames initiales d'un réseau local, avantageusement Ethernet, en trames modifiées pour être conformées au réseau à multiplexage temporel.

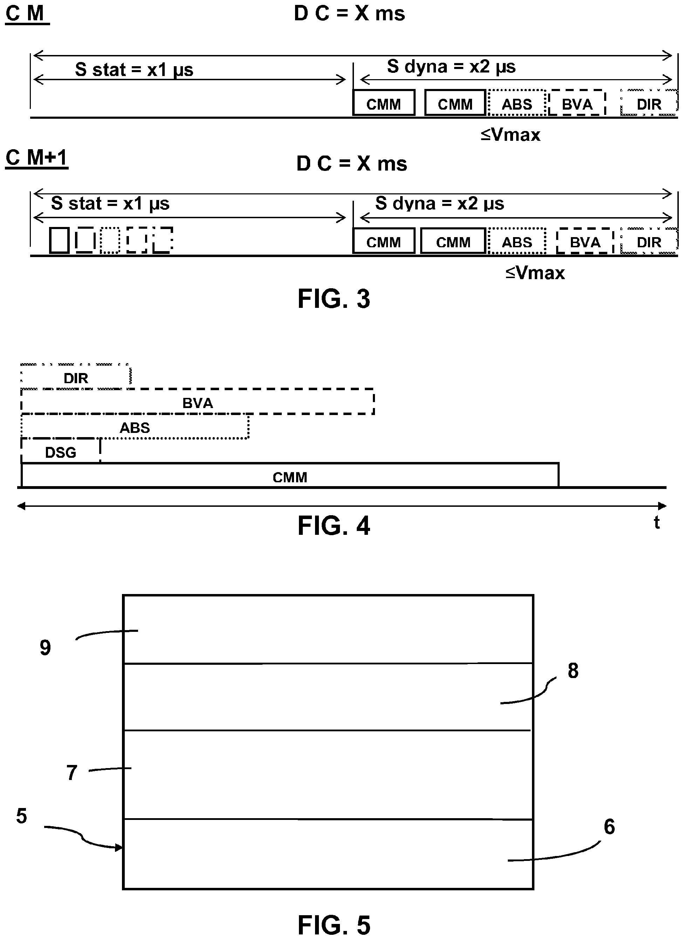

Les figures 2 et 3 montrent entre autres les possibles paramétrages du réseau à multiplexage temporel pour le téléchargement de calculateurs, à cette figure cinq calculateurs. Les calculateurs représentés à ces figures sont des calculateurs destinés à un véhicule automobile, ce qui n'est pas limitatif.

A ces figures, il a été donné, de manière non limitative, des exemples de calculateurs pouvant être ceux illustrés à la figure 1 sous les références 4, 4a, 4b, c'est-à-dire un calculateur de contrôle moteur ou CMM, un calculateur DSG de détection de sous-gonflage, un calculateur ABS de système d'antiblocage des roues ou d'électrostabilisateur programmé, un calculateur DIR pour la direction du véhicule et un calculateur BVA de boîte de vitesses automatique. D'autres calculateurs sont aussi possibles, par exemple des calculateurs de suspension ou des calculateurs d'habitacle.

L'invention va être décrite avec l'utilisation d'un réseau à multiplexage temporel pour le téléchargement de calculateurs en tant qu'équipements du réseau. Il est rappelé que dans un tel réseau l'accès des équipements au bus multiplexé se fait selon le mode d'accès multiple à répartition dans le temps dit TDMA ou multiplexage temporel, chaque équipement, à savoir chaque calculateur, disposant au cours de chaque cycle d'au moins une tranche temporelle allouée ou segment statique, pendant laquelle il est autorisé à émettre des données.

Plus précisément, l'accès au bus est partagé, périodiquement, entre deux segments : le segment statique, pour les flux périodiques, et le segment dynamique, pour les flux apériodiques. Dans le segment statique, l'accès se fait suivant un mécanisme par accès multiple à répartition dans le temps ou TDMA. Le temps est partagé entre les différents noeuds du réseau. C'est uniquement pendant le (ou les) intervalle(s) de temps alloué(s) que l'un des noeuds peut transmettre un message, à destination de tous les autres.

Dans le segment dynamique, l'accès se fait suivant un accès multiple à répartition souple dans le temps ou FTDMA, aussi connu sous la dénomination anglo-saxonne de « Flexible Time Division Multiple Access », qui consiste à gérer des priorités par temps d'attente. On appelle cycle de communication une durée comptée en MacroTick qui est une unité de temps liée à la fréquence d'horloge des calculateurs. Cette durée est divisée en au moins deux zones logiques consécutives du point de vue temporel : le segment statique et le segment dynamique. Ceci est montré aux figures 2 et 3.

Avec un réseau à multiplexage temporel définissant des cycles C de communication successifs et répétitifs avec un segment statique S stat et un segment dynamique S dyna, un calculateur ne peut recevoir que Vmax octets à programmer dans sa mémoire en X millisecondes ou Xms, cette durée D C ou durée de cycle se décomposant en une durée de segment statique S stat de x1 en micro-secondes ou µs et une durée de segment dynamique S dyna de x2 en micro-secondes ou µs. Vmax est le nombre maximal d'octets toléré ou admissible par trame du réseau à multiplexage envoyé pendant un segment dynamique S dyna. Comme il est montré à la figure 2, durant des cycles C consécutifs N et N+1, au moins un calculateur et de préférence cinq calculateurs peuvent être alimentés toutes les X ms, chacun recevant au plus un nombre d'octets égale à Vmax à programmer en mémoire durant ces X ms.

Dans un mode de réalisation préférentielle de l'invention, afin de garantir l'optimisation de la performance du téléchargement, il a été retenu les valeurs suivantes : la durée d'un cycle est X=1,7ms, la durée d'un segment statique est x1=840µs, la durée d'un segment dynamique est x2=840µs et le nombre d'octets maximal par trame est Vmax=128 octets. Cette configuration a été retenue car elle représente le meilleur compromis pour les calculateurs dont les mémoires se programment par paquets de 128 octets qui est la taille que l'on trouve aujourd'hui sur la majorité des calculateurs. Le paramétrage initialement défini doit pour cette raison être maintenu. Bien entendu d'autres valeurs restent possibles pour d'autres constructeurs en fonction de leur choix.

Il est important de souligner que l'émission par l'outil de production via la passerelle de trames de 128 octets par cycle de 1,7ms représente un débit théorique par calculateur qui compte tenu du temps imparti à l'opération de téléchargement dans le flux de production ne permet pas le téléchargement d'une mémoire de calculateur qui peut atteindre de 16Mo ou mégaoctets ou plus ce qui correspond aux tailles mémoires envisagées sur les calculateur de contrôle moteur.

La taille de la mémoire d'un calculateur dépend de la complexité des tâches que doit réaliser ce calculateur. Ceci est illustré à la figure 4 qui montre le temps nécessaire de téléchargement d'un logiciel applicatif pour les calculateurs montrés aux figures 2 et 3 et détaillés précédemment. Ainsi, un calculateur de contrôle moteur CMM en charge de la gestion de l'injection et de l'allumage moteur est le calculateur le plus complexe qui requiert la plus grande mémoire à télécharger durant la production du véhicule qui intégrera ce calculateur.

En se référant toujours à la figure 4, il en va de même pour le calculateur BVA de gestion de la boîte de vitesses automatique. D'autres calculateurs embarquant des mémoires de taille sensiblement inférieure au calculateur CMM ou au calculateur BVA n'occupent le réseau à multiplexage temporel que pendant une courte portion du temps imparti à l'opération de téléchargement.

La figure 4 montre que le calculateur DSG n'est téléchargé que pendant une courte portion du temps imparti à l'opération de téléchargement. Conformément à la présente invention, une fois le téléchargement du calculateur DSG terminé, il devient alors possible d'attribuer deux trames de téléchargement en parallèle, c'est-à-dire dans le même cycle de communication à un même calculateur, de préférence celui du contrôle moteur CMM dont le logiciel applicatif est le plus long à télécharger.

En se référant à nouveau aux figures 2 et 3, la figure 2 montre les téléchargements de tous les calculateurs pendant des segments dynamiques de deux cycles C successifs N et N+1, aucun téléchargement n'étant terminé. A la figure 3, il est montré des téléchargements de calculateurs pendant des segments dynamiques S dyna de deux cycles C successifs M et M+1 avec un calculateur en moins qu'à la figure 2, ce calculateur ayant fini le téléchargement de son logiciel applicatif et l'ayant mis en mémoire au fur et à mesure de la réception des trames relatives à ce logiciel applicatif puis la recomposition des requêtes d'écriture contenant les données logicielles à écrire en mémoire.

Le calculateur DSG référencé à la figure 2 et montrant à la figure 4 un temps de téléchargement le plus court de tous les calculateurs a fini de télécharger son logiciel applicatif. Le logiciel applicatif du calculateur CMM du contrôle moteur, au temps de téléchargement le plus long comme illustré à la figure 4, est téléchargé par deux trames dans des canaux de communication de la bande passante, ce qui permet de doubler la bande passante vers ce calculateur CMM et autorise l'envoi de deux fois plus de données dans le temps imparti.

Comme précédemment mentionné, dans un segment statique S stat, il ne peut être attribué qu'une seule trame de communication par calculateur. C'est pendant un segment statique S stat que chaque calculateur peut répondre à une requête lui ayant été envoyée lors d'un cycle précédent par la passerelle référencée 3 à la figure 1.

Les requêtes émises par l'outil de production à destination du ou des calculateurs dont les logiciels applicatifs sont à télécharger dans le ou les calculateurs sont cependant transportées via le segment dynamique S dyna. Celui-ci autorise l'attribution de plusieurs canaux de communication pour l'envoi de trames au même calculateur, quand ceci est possible, avantageusement quand le logiciel applicatif d'un ou de plusieurs autres calculateurs a été téléchargé, ou bien que, dès le début du téléchargement, le nombre de calculateurs en cours de téléchargement est inférieur au nombre de canaux disponibles par cycle de communication.

Un troisième cas de figure permet l'allocation de plusieurs canaux de communication à un même calculateur lorsqu'un des calculateurs en cours de téléchargement ne répond pas à chaque cycle car son temps de traitement ne le permet pas. Il est alors possible de réaffecter pour le cycle en question le canal de communication réservé à ce calculateur à un autre calculateur. Il est de ce fait possible d'envoyer par plusieurs canaux de communication des trames au même calculateur chacune transportant un nombre maximal Vmax de données, par exemple 128 octets, durant le même cycle de communication.

Ainsi en se référant à toutes les figures, la présente invention concerne un procédé pour le téléchargement de requêtes d'écriture TD c'est-à-dire de transfert de données, aussi connu sous la dénomination anglo-saxonne de « Transfer Data » selon la terminologie de l'UDS qui est un protocole d'accès aux données de diagnostic embarquées des calculateurs automobiles de données logicielles applicatives dans au moins une mémoire d'un calculateur 4 tout en pouvant concerner d'autres calculateurs 4a, 4b , les calculateurs 4, 4a, 4b étant embarqués dans un véhicule.

Les requêtes d'écriture TD étant transmises aux calculateurs en trames initiales dans un premier réseau local, puis, après conversion en trames modifiées, dans un second réseau à multiplexage temporel définissant des cycles de communication successifs et présentant une bande passante divisée en plusieurs canaux de communication, chaque canal étant attribué à un calculateur 4, 4a, 4b.

Les trames initiales du premier réseau local sont émises par un outil d'équipement 1 via le premier réseau sous forme de trames initiales. Une passerelle 3 effectue la conversion des trames initiales en trames modifiées conformées au second réseau. Les calculateurs 4, 4a, 4b intègrent chacun un chargeur d'amorçage 5 pour la réception de trames modifiées conformées au second réseau. Ce chargeur d'amorçage 5 comprend des moyens d'écriture en mémoire des données logicielles contenues dans les trames modifiées.

Chacun des calculateurs 4, 4a, 4b comprend une mémoire non volatile réinscriptible. Par exemple, cette mémoire peut être une mémoire NVRAM pour mémoire à accès aléatoire non volatile, aussi connue sous l'abréviation anglo-saxonne de « Non Volatil Random Access Memory ». A titre d'illustration, il s'agit d'une mémoire connue sous la terminologie de «mémoire flash» ou «flash Eprom». Cette mémoire peut contenir des fichiers. Ces fichiers peuvent contenir des instructions exécutables par le calculateur 4, 4a, 4b.

Par exemple, dans le cas d'un véhicule automobile équipé d'un calculateur moteur, il s'agit d'instructions pour contrôler le moteur du véhicule. C'est ce fichier exécutable, aussi appelé applicatif, qui correspond au logiciel pouvant être programmé ou reprogrammé par téléchargement en usine de montage ou en service après-vente.

Le procédé selon l'invention comprend les étapes suivantes :
- pour la conversion, on segmente les trames initiales en trames modifiées contenant chacune un nombre d'octets inférieur à un nombre maximal Vmax admissible par le second réseau,
- quand le téléchargement d'un des calculateurs 4, 4a, 4b est terminé, on réattribue le canal de communication de ce calculateur à l'un des calculateurs restant 4, 4a, 4b pour l'envoi de trames modifiées en plus de celles reçues par son canal de communication attribué,
- on recompose dans le calculateur 4, 4a, 4b bénéficiant de cette augmentation de bande passante la requête d'écriture lui étant destinée par regroupement des trames modifiées et écriture en mémoire des données logicielles.

Lorsque plusieurs calculateurs 4, 4a, 4b sont en cours de téléchargement par exemple cinq calculateurs, les canaux associés aux calculateurs ayant terminé leur téléchargement peuvent être réattribués au(x) calculateur(s) restant(s) sans que cela soit limité à deux canaux par calculateurs. Il en va de même si seul un calculateur est en cours de téléchargement, il pourra dès le début de l'opération bénéficier à lui seul de tous les canaux disponibles, par exemple cinq canaux comme montré aux figures 2 et 3, par cycle de communication.

Dans le système selon la présente invention, la passerelle 3 comprend des moyens de réception de données provenant de chaque calculateur 4, 4a, 4b lui indiquant un état de chargement dans le calculateur 4, 4a, 4b de sa requête d'écriture Req TD associée. Cette passerelle 3 est configurée pour prendre en compte le nombre maximal Vmax d'octets admissible par le second réseau dans les trames modifiées et la passerelle 3 comprend également des moyens de segmentation des trames initiales en trames modifiées avec chacune un nombre d'octets inférieur ou égal au nombre maximal Vmax.

De plus, chaque chargeur d'amorçage 5 comporte une couche de recomposition des trames modifiées en une requête d'écriture Req TD complète destinée à être écrite en mémoire.

Un chargeur d'amorçage 5 de calculateur est montré à la figure 5. Ce chargeur d'amorçage 5 comprend plusieurs couches dont une couche de réception 6 des trames modifiées du second réseau étant un réseau à multiplexage temporel, une couche de communication 7 avec le second réseau, une couche de recomposition 8 des trames modifiées en une requête d'écriture Req TD complète, cette couche étant spécifique d'un système de téléchargement selon la présente invention. Enfin, le chargeur d'amorçage 5 présente une couche supérieure, par exemple en format UDS qui est un protocole de diagnostic pour véhicule automobile, pour l'écriture dans la mémoire du calculateur associé des données logicielles ayant été téléchargées.

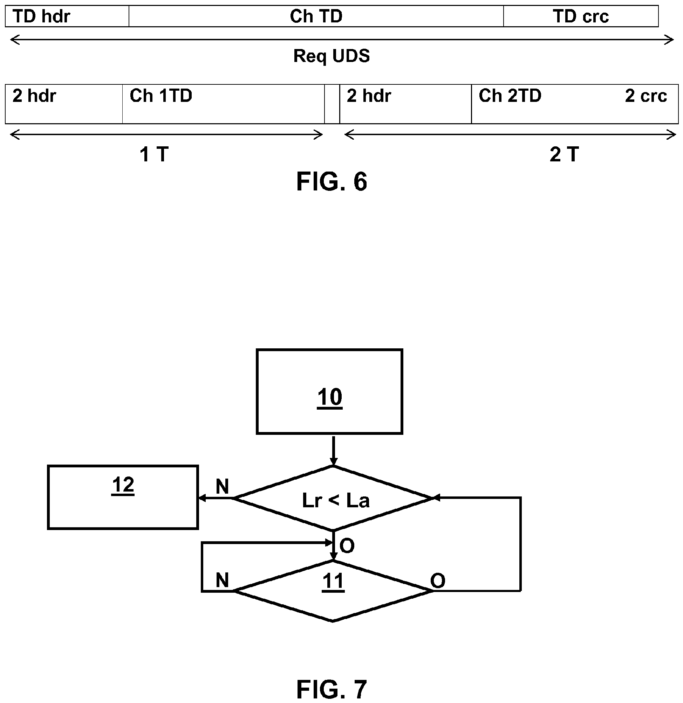

La figure 6 montre la conversion d'une requête d'écriture Req TD du premier réseau sous forme d'une requête UDS Req UDS. Cette requête d'écriture du premier réseau comprend un en-tête TD hdr et une fin de requête d'écriture Req TD crc en portant une charge utile ou Ch TD, cette charge Ch TD étant par exemple de 250 octets. Une trame T1 ou T2 conformée au second réseau comprend un en-tête 2 hdr et une fin de trame 2 crc adaptés au second réseau.

En se référant aux figures 1, 2, 3 et 6, lorsqu'une requête d'écriture est reçue par la passerelle 3, celle-ci compare la longueur des données utiles reçue au nombre maximal Vmax prédéterminé d'octets admissible pour chaque segment de seconde trame, cette admissibilité variant d'un réseau de multiplexage à un autre. Si la longueur de la requête est supérieure à ce nombre maximal, la passerelle 3 fragmente la requête en plusieurs trames modifiées 1T, 2T conformées au second réseau à multiplexage temporel, chacune des trames transportant au plus le nombre maximal Vmax prédéterminé d'octets. Les portions de trames modifiées conformées au second réseau à multiplexage temporel sont alors envoyées l'une après l'autre vers le calculateur 4, 4a, 4b destinataire.

La requête d'écriture Req TD du premier réseau, pouvant être écrite en conformité avec le protocole UDS qui est un protocole de communication usuellement utilisé par l'ensemble des constructeurs automobiles, est convertie en une ou plusieurs trames appelées 1T et 2T adaptées au second réseau qui est un réseau à multiplexage temporel. La requête d'écriture Req TD issue initialement du premier réseau est donc divisée en plusieurs trames 1T et 2T si le nombre maximal d'octets par trames est dépassé.

Chaque trame 1T et 2T présente une charge respective Ch 1TD et Ch 2TD. A la figure 6, le nombre maximal d'octets par trame 1T, 2T est de 128 octets. Le fait qu'à la figure 6, deux trames 1T et 2T soient illustrées pour la segmentation de la requête d'écriture Req TD n'est pas limitatif.

A la figure 6, il y a donc pour une requête d'écriture Req TD une première trame T1 de charge utile Ch 1TD de 128 octets et une seconde trame T2 de charge utile Ch 2TD qui se monte à 250 -128 soit 122 octets. Il pourrait y avoir plus de deux trames T1, T2 si la charge utile Ch TD à segmenter le nécessitait. Chaque portion de requête d'écriture ou trame 1T ou 2T adaptée au second réseau comprend un en-tête 2hdr, cet en-tête permettant d'identifier le calculateur 4, 4a, 4b réceptionnaire de la trame 1T ou 2T. Le nombre 2 de l'en-tête 2 hdr ou fin de trame 2 crc indique que cet en-tête ou cette fin de trame est conformé au second réseau.

Les en-têtes 2 hdr des trames modifiées adaptées au second réseau ne permettent pas à eux seuls d'indiquer au logiciel du chargeur d'amorçage 5, montré à la figure 5 et réalisant l'écriture des données en mémoire, que plusieurs trames modifiées adaptées au second réseau à multiplexage temporel composent une même requête d'écriture émise par l'outil de production 1.

Il va maintenant être décrit deux modes de réalisation d'une recomposition d'une requête UDS Req UDS à partir des trames 1T, 2T conformées au réseau à multiplexage temporel, ceci représentant l'étape de recomposition ou désegmentation ayant lieu dans le chargeur d'amorçage d'un calculateur. Il sera fait référence à toutes les figures et notamment aux figures 7 à 9.

Dans le premier mode de réalisation, montré plus particulièrement à la figure 7, le calculateur implémente les requêtes de téléchargement selon une version personnalisée. Pour cette version, lorsqu'un calculateur reçoit dans le cadre référencé 10, une trame modifiée conformée à un réseau à multiplexage temporel qu'il identifie comme transportant une requête d'écriture dénommée Req TD, le calculateur vérifie si cette trame contient l'ensemble de la requête d'écriture Req TD ou bien s'il doit attendre sa complétude via une ou plusieurs autres trames conformées au réseau à multiplexage temporel à venir. Ceci peut être fait par la couche de recomposition 8 qui a été représentée à la figure 5 dans le chargeur d'amorçage 5.

En se référant plus particulièrement aux figures 5 à 7, l'état de complétude de la requête d'écriture Req TD est vérifié par cette couche de recomposition 8 en comparant la longueur des données transportées ou longueur attendue La par la requête renseignée via son en-tête TD hdr avec la longueur des données utiles reçues Lr, la longueur attendue La étant représentative du total des données attendues et la longueur reçue Lr étant représentative du total des données reçues via les trames conformées au réseau à multiplexage temporel.

Si la longueur des données reçues Lr est égale à la longueur attendue La renseignée par l'intermédiaire de l'en-tête TD hdr, la ou les trames modifiées reçues contiennent l'intégralité de la requête d'écriture Req TD. La couche de recomposition 8 peut alors remonter la requête venant d'être reçue à la couche supérieure, avantageusement UDS et référencée 9 à la figure 5, en vue de l'écriture en mémoire des données logicielles téléchargées. Ceci est fait dans le cadre 12 par la sortie N pour NON à la question si la longueur des données reçues Lr est inférieure à la longueur attendue La.

Si au contraire la longueur des données reçues Lr est inférieure à la longueur attendue La renseignée, ce qui est symbolisé par la sortie O pour OUI, la ou les trames modifiées reçues ne contiennent pas l'intégralité de la requête d'écriture Req TD dont la complétude doit avoir lieu en attendant l'arrivée d'autres trames modifiées conformées au réseau à multiplexage temporel jusqu'à ce que la longueur attendue La soit obtenue. Il est alors procédé au questionnement dans le losange 11 à savoir si une nouvelle trame a été reçue ou non avec les sorties respectives O pour OUI et N pour NON.

Une fois l'intégralité de la requête d'écriture Req TD reçue, celle-ci est remontée à la couche supérieure, avantageusement UDS, en vue de l'écriture en mémoire des données utiles.

Dans le deuxième mode de réalisation de la présente invention, le calculateur implémente une version standard, par exemple ISO 14229-1, des requêtes de téléchargement TD. Dans ce cas, l'en-tête propre à chaque requête d'écriture Req TD ne contient pas la longueur des données transportées par la requête. La couche de recomposition 8 doit déterminer cette longueur selon les étapes décrites ci-après.

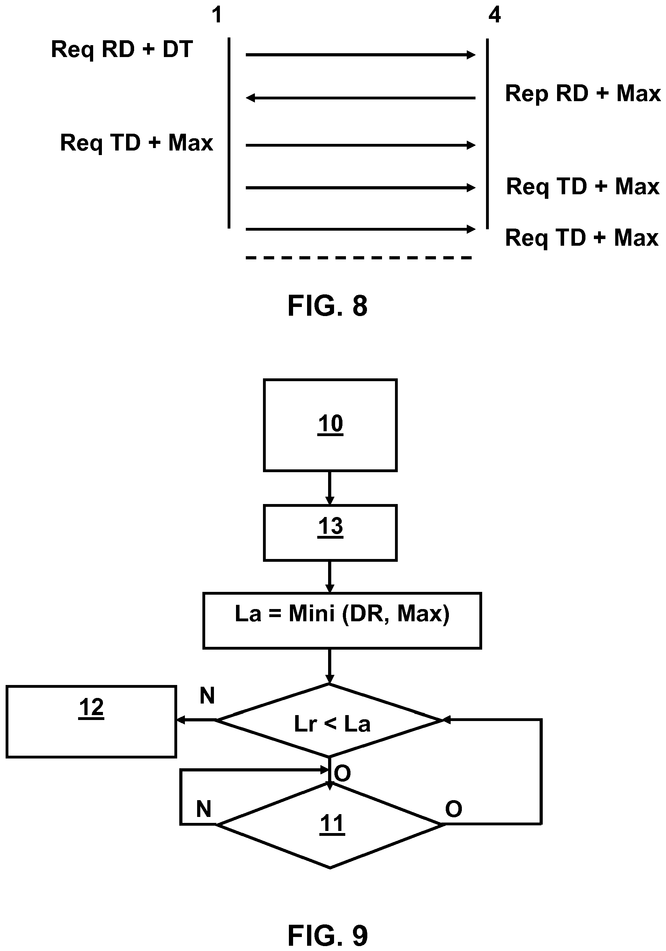

En se référant à toutes les figures et particulièrement aux figures 1, 5, 8 et 9, l'émission des requêtes d'écriture Req TD est précédée par une première requête Req RD + DT ou requête de début de téléchargement par laquelle l'outil 1 informe le calculateur 4, 4a, 4b de la taille totale DT des données qui seront transmises via les requêtes d'écriture Req TD. Comme montré notamment aux figures 1 et 8, les calculateurs 4, 4a, 4b répondent à l'outil 1 en retournant une réponse Rep RD à la requête de début de téléchargement Req RD. Cette réponse Rep RD indique la taille maximale ou nombre maximal d'octets Max admissible par requête d'écriture Req TD que l'outil 1 pourra transmettre au calculateur 4, 4a, 4b. Il est à garder à l'esprit que le nombre maximal d'octets admissible par requête, référencé Max, ne représente pas la taille maximale par trames modifiées conformées au réseau à multiplexage temporel, mais la taille maximale par requête d'écriture Req TD avant segmentation et conversion en trames compatibles du second réseau.

Lorsqu'un calculateur 4, 4a, 4b reçoit une trame modifiée c'est-à-dire conformée au réseau à multiplexage temporel qui est le second réseau et qu'il identifie cette trame comme transportant des données relative à une requête d'écriture Req TD, il doit vérifier si cette trame contient l'ensemble de la requête d'écriture Req TD ou bien s'il doit attendre sa complétude via une ou plusieurs autres trames modifiées conformées au second réseau à multiplexage temporel.

En se référant à toutes les figures et plus particulièrement aux figures 1, 5 et 9, l'état de complétude de la requête d'écriture Req TD est vérifié par la couche de recomposition 8 du chargeur d'amorçage 5 du calculateur 4, 4a, 4b lors de la réception d'une trame relative à la requête d'écriture Req TD comme suit :
- dans le cadre 10, un calculateur reçoit une trame modifiée conformée à un réseau à multiplexage temporel qu'il identifie comme transportant une requête d'écriture dénommée Req TD,
- il est ensuite procédé dans le cadre 13 au calcul de la taille restante DR des données totales attendues qui est la taille totale des données moins le nombre d'octets déjà reçus via toutes les requêtes d'écriture Req TD déjà reçues et pour lesquelles les données ont été inscrites en mémoire,
- calcul du nombre d'octets de données transportés par la requête d'écriture Req TD comme étant le minimum entre les données restantes DR et le nombre maximal admissible Max par requête d'écriture Req TD, La= Mini (DR, Max),
- il est procédé à la comparaison de la longueur des données transportées La par la requête obtenue au point précédent avec la longueur des données utiles reçues Lr via la trame courante avec le questionnement si la longueur des données reçues Lr est inférieure à la longueur attendue La avec des sorties N pour NON et O pour OUI.

Ce qui a été énoncé pour les rectangles 11 et 12 de la figure 7 s'applique aussi pour les rectangles 11 et 12 de la figure 9.

Si la longueur des données reçues Lr est égale au nombre d'octets transportés par la requête d'écriture Req TD, calculé comme étant le minimum entre les données restantes DR et le nombre maximal admissible Max par requête d'écriture Req TD, soit Mini (DR, Max), la ou les trames reçues contiennent l'intégralité de la requête d'écriture Req TD. La couche de recomposition 8 peut alors remonter la requête venant d'être reçue à la couche supérieure 9, avantageusement UDS, en vue de l'écriture en mémoire des données utiles dans le chargeur d'amorçage 5 du calculateur 4, 4a, 4b, ce qui est symbolisé par le rectangle 12.

Si au contraire la longueur des données reçues Lr est inférieure au nombre d'octets que doit transporter la requête d'écriture Req TD, calculé comme Mini (DR, Max), la ou les trames reçues ne contiennent pas l'intégralité de la requête d'écriture Req TD dont la complétude doit avoir lieu en attendant l'arrivée d'autres trames modifiées conformées au réseau à multiplexage temporel jusqu'à ce que la longueur attendue soit obtenue. Une fois l'intégralité de la requête d'écriture Req TD reçue, celle-ci est remontée après recomposition à la couche supérieure 9, avantageusement UDS, en vue de l'écriture en mémoire des données utiles.

C'est par le biais des mécanismes précédemment décrits qu'il devient possible de transmettre dans le même cycle d'un second réseau étant à multiplexage temporel plusieurs trames de 128 octets au même calculateur. Cela rend possible la mise à jour de la mémoire complète d'un calculateur de 16Mégaoctets sans augmenter le temps nécessaire pour cela lors de la fabrication du véhicule. Cela vaut aussi en service après-vente.

Bénéficier de la solution technique décrite par la présente invention permet de non seulement réduire les coûts de gestion liés à la diversité des équipements électroniques au sein des usines de montage d'un constructeur automobile ainsi que chez les fournisseurs, mais également de gagner le temps d'approvisionnement du ou des calculateurs rendant possible un démarrage anticipé de la production d'un véhicule. Ceci est aussi valable pour d'autres domaines de véhicule que les véhicules automobiles et d'une manière générale pour le téléchargement de plusieurs calculateurs simultanément.

Un réseau à multiplexage temporel, aussi dit réseau déterministe, est une technologie nouvelle disposant d'un mécanisme déterministe permettant de connaître « l'heure » à laquelle une information est reçue. Cette technologie n'est aujourd'hui qu'en phase de déploiement dans l'automobile notamment pour les besoins fonctionnels, mais son utilisation est en pleine expansion.

Dans ce qui a été décrit, on a considéré que le second réseau était un réseau à multiplexage temporel. L'invention peut cependant être appliquée à l'association de tous réseaux de communication asynchrones de types différents et présentant des débits différents, ces réseaux comprenant des équipements qui sont connectés en parallèle à un bus multiplexé.

L'invention n'est nullement limitée aux modes de réalisation décrits et illustrés qui n'ont été donnés qu'à titre d'exemples.

## Revendications

1. Procédé pour le téléchargement de requêtes d'écriture (Req TD) de données logicielles applicatives dans au moins une mémoire d'un ou plusieurs calculateurs (4, 4a, 4b), les requêtes d'écriture (Req TD) étant transmises au ou aux calculateurs (4, 4a, 4b) en trames initiales dans un premier réseau local, puis, après conversion en trames modifiées, dans un second réseau à multiplexage temporel présentant plusieurs canaux de communication, chaque canal étant attribué à un calculateur (4, 4a, 4b), ce second réseau étant paramétré selon un cycle de communication répétitif, ce cycle de communication comprenant l'envoi d'une trame modifiée par canal (4, 4a, 4b), **caractérisé en ce que** :
- pour la conversion, on segmente les trames initiales en trames modifiées contenant chacune un nombre d'octets inférieur ou égal à un nombre maximal (Vmax) admissible par le canal associé au calculateur dans le second réseau,
- quand il existe durant le cycle de communication un ou plusieurs canaux libres parce que les requêtes d'écritures destinées à un ou plusieurs calculateurs sont terminées, les canaux libres sont réattribués au ou aux calculateurs restants en cours de téléchargement pour l'envoi de trames modifiées supplémentaires,
- on recompose dans le ou les calculateurs (4, 4a, 4b) restants la requête d'écriture (Req TD) lui ou leur étant destinées par regroupement des trames modifiées et écriture en mémoire des données logicielles.

2. Procédé selon la revendication 1, dans lequel le second réseau à multiplexage temporel est à communication par bus, périodiquement partagé pendant un cycle, entre un segment statique et un segment dynamique, l'envoi simultané de trames modifiées pour le ou les calculateurs (4, 4a, 4b) en cours de téléchargement n'étant possible que dans le segment dynamique.

3. Procédé selon la revendication 1 ou la revendication 2, dans lequel le nombre de calculateurs est de cinq.

4. Procédé selon l'une quelconque des revendications 1 à 3, dans lequel, quand chaque calculateur (4, 4a, 4b) reçoit une trame modifiée, il est procédé à l'identification si cette trame finalise une requête d'écriture (Req TD) complète ou comme faisant partie d'une requête d'écriture (Req TD) non encore complète, cette identification étant suivie, dans le premier cas, par une écriture des données logicielles dans la mémoire du calculateur (4, 4a, 4b) et, dans le second cas, par l'attente des trames modifiées non encore parvenues au calculateur (4, 4a, 4b) pour la recomposition de la requête d'écriture (Req TD).

5. Procédé selon la revendication 4, dans lequel, lors de la conversion, il est mesuré le nombre d'octets total de chaque requête d'écriture (Req TD) pour chaque calculateur et il est généré autant de trames modifiées segmentant cette requête d'écriture qu'il n'en faut pour contenir l'ensemble des octets de chaque requête d'écriture (Req TD), le nombre de trames générées dépendant du nombre maximal (Vmax) d'octets admissible par trame modifiée.

6. Procédé selon la revendication 5, dans lequel, lors de la recomposition de la requête d'écriture (Req TD) dans un calculateur (4, 4a, 4b), il est procédé pour chaque requête d'écriture (Req TD) à une comparaison entre le nombre total d'octets de la requête d'écriture (Req TD) en tant que total des données attendues et le nombre d'octets des trames modifiées ayant déjà été reçues et segmentant la requête d'écriture (Req TD) en tant que total des données reçues et, si ces deux nombres d'octets sont égaux, il en est déduit que la requête d'écriture (Req TD) a été complètement reçue par le calculateur et il est procédé à son écriture en mémoire, tandis que si le nombre total d'octets de la requête d'écriture (Req TD) attendu est supérieur au nombre total d'octets des trames modifiées reçues, la recomposition de la requête d'écriture (Req TD) est en attente de réception de nouvelles trames jusqu'à ce que la longueur attendue soit égale au nombre total d'octets des trames modifiées reçues.

7. Procédé selon la revendication 4, dans lequel il est émis vers chaque calculateur (4, 4a, 4b) devant être téléchargé, une première requête de téléchargement dans laquelle est indiqué le nombre total d'octets qui devront être téléchargés, le calculateur (4, 4a, 4b) indiquant en retour le nombre maximal (Max) prédéterminé d'octets par la requête d'écriture (Req TD) transmise par un outil d'équipement (1).

8. Procédé selon la revendication 7, dans lequel, pour chaque requête d'écriture (Req TD) associée à un calculateur (4, 4a, 4b), il est procédé :
- au calcul d'un nombre d'octets restant à recevoir,
- au calcul d'un nombre d'octets transportés comme étant le minimum entre le nombre d'octets restant à recevoir et le nombre maximal (Max) prédéterminé d'octets par requête d'écriture (Req TD),
- à la comparaison du nombre d'octets transportés par requête d'écriture (Req TD) avec le nombre d'octets déjà reçus en additionnant les octets des trames modifiées déjà reçues par le calculateur (4, 4a, 4b),
- avec, si le nombre d'octets déjà reçus est égal au nombre d'octets transportés, détermination que les trames modifiées déjà reçues contiennent l'intégralité de la requête d'écriture (Req TD), auquel cas il est procédé à l'écriture dans la mémoire du calculateur (4, 4a, 4b) des données de la requête d'écriture (Req TD), ou
- si au contraire le nombre d'octets déjà reçus est inférieur au nombre d'octets total transportés par la requête d'écriture (Req TD), détermination que les trames modifiées reçues ne contiennent pas l'intégralité de la requête d'écriture (Req TD), auquel cas la recomposition de la requête d'écriture (Req TD) est continuée en attente de l'arrivée de nouvelles trames.

9. Procédé selon l'une quelconque des revendications précédentes, le second réseau ainsi que le ou les calculateurs étant embarqués dans un véhicule tandis que le premier réseau est hors véhicule.

## Patentansprüche

1. Verfahren für das Herunterladen von Schreibanforderungen (Req TD) von Anwendungssoftwaredaten in mindestens einen Speicher eines oder mehrerer Rechner (4, 4a, 4b), wobei die Schreibanforderungen (Req TD) an den oder die Rechner (4, 4a, 4b) in Anfangsrahmen in einem ersten lokalen Netzwerk übertragen werden, dann, nach der Umwandlung in geänderte Rahmen in einem zweiten Netzwerk mit Zeitmultiplexen, das mehrere Kommunikationskanäle aufweist, wobei jeder Kanal einem Rechner (4, 4a, 4b) zugewiesen ist, wobei dieses zweite Netzwerk gemäß einem wiederholenden Kommunikationszyklus parametriert ist, wobei dieser Kommunikationszyklus das Senden eines geänderten Rahmens (4, 4a, 4b) umfasst, **dadurch gekennzeichnet, dass**
- für das Umwandeln die Anfangsrahmen in geänderte Rahmen segmentiert werden, die jeweils eine Anzahl Bytes enthalten, die kleiner oder gleich einer maximalen Anzahl (Vmax) ist, die durch den Kanal, der mit dem Rechner in dem zweiten Netzwerk assoziiert ist, zulässig ist,
- wenn während des Kommunikationszyklus ein oder mehrere freie Kanäle existieren, weil die Schreibanforderungen, die für einen oder mehrere Rechner bestimmt sind, abgeschlossen sind, diese freien Kanäle dem oder den restlichen Rechnern, die gerade herunterladen, für das Senden zusätzlicher geänderter Rahmen neu zugewiesen werden,
- in dem oder den restlichen Rechnern (4, 4a, 4b) die Schreibanforderungen (Req TD), die für ihn oder sie bestimmt sind, durch Umgruppierung der geänderten Rahmen und Schreiben der Softwaredaten in den Speicher neu zusammengesetzt wird.

2. Verfahren nach Anspruch 1, wobei das zweite Netzwerk mit Zeitmultiplexen Kommunikation durch einen Bus aufweist, der periodisch während eines Zyklus zwischen einem statischen Segment und einem dynamischen Segment geteilt ist, wobei das gleichzeitige Senden geänderter Rahmen für den oder die Rechner (4, 4a, 4b) im Laufe des Herunterladens nur in dem dynamischen Segment möglich ist.

3. Verfahren nach Anspruch 1 oder Anspruch 2, wobei die Anzahl von Rechnern fünf beträgt.

4. Verfahren nach einem der Ansprüche 1 bis 3, wobei, wenn jeder Rechner (4, 4a, 4b) einen geänderten Rahmen empfängt, die Identifikation ausgeführt wird, ob dieser Rahmen eine vollständige Schreibanforderung (Req TD) abschließt oder Teil einer noch nicht vollständigen Schreibanforderung (Req TD) ist, wobei auf diese Identifikation in dem ersten Fall ein Schreiben der Softwaredaten in den Speicher des Rechners (4, 4a, 4b) folgt, und in dem zweiten Fall das Warten auf geänderte Rahmen, die noch nicht zu dem Rechner (4, 4a, 4b) gelangt sind, für die Neuzusammensetzung der Schreibanforderung (Req TD).

5. Verfahren nach Anspruch 4, wobei bei der Umwandlung die Gesamtanzahl von Bytes jeder Schreibanforderung (Req TD) für jeden Rechner gemessen wird, und ebenso viele geänderte Rahmen erzeugt werden, die diese Schreibanforderung segmentieren, wie erforderlich ist, um sämtliche Bytes jeder Schreibanforderung (Req TD) zu enthalten, wobei die Anzahl erzeugter Rahmen von einer maximalen Anzahl (Vmax) von Bytes, die pro geändertem Rahmen zulässig ist, abhängt.

6. Verfahren nach Anspruch 5, wobei bei der Neuzusammensetzung der Schreibanforderung (Req TD) in einem Rechner (4, 4a, 4b) für jede Schreibanforderung (Req TD) ein Vergleich zwischen der Gesamtanzahl von Bytes der Schreibanforderung (Req TD) als Summe der erwarteten Daten und der Anzahl von Bytes der geänderten Rahmen, die bereits empfangen wurden, und die die Schreibanforderung (Req TD) segmentieren als Summe der empfangenen Daten ausgeführt wird, und, falls diese zwei Anzahlen von Bytes gleich sind, daraus abgeleitet wird, dass die Schreibanforderung (Req TD) von dem Rechner vollständig empfangen wurde, und ihr Schreiben in den Speicher ausgeführt wird, während, falls die erwartete Gesamtanzahl von Bytes der Schreibanforderung (Req TD) größer ist als die Gesamtanzahl der empfangenen geänderten Rahmen, die Neuzusammensetzung der Schreibanforderung (Req TD) auf den Empfang neuer Rahmen wartet, bis die erwartete Länge gleich der Gesamtanzahl von Bytes der empfangenen geänderten Rahmen ist.

7. Verfahren nach Anspruch 4, wobei zu jedem Rechner (4, 4a, 4b), in den heruntergeladen werden soll, eine erste Herunterladeanforderung gesendet wird, in der die Gesamtanzahl von Bytes angegeben ist, die herunterzuladen ist, wobei der Rechner (4, 4a, 4b) rückwendend die vorbestimmte maximale Anzahl (Max) von Bytes durch die Schreibanforderung (Req TD), die von einem Ausstattungswerkzeug (1) übertragen wird, angibt.

8. Verfahren nach Anspruch 7, wobei für jede Schreibanforderung (Req TD), die mit einem Rechner (4, 4a, 4b) assoziiert ist, Folgendes ausgeführt wird:
- die Berechnung einer Anzahl von Bytes, die noch zu empfangen ist,
- die Berechnung einer Anzahl transportierter Bytes als das Minimum zwischen der restlichen Anzahl von Bytes, die zu empfangen ist, und der vorbestimmten maximalen Anzahl (Max) von Bytes für die Schreibanforderung (Req TD),
- beim Vergleich der Anzahl von Bytes, die durch die Schreibanforderung (Req TD) transportiert wird, mit der Anzahl von Bytes, die bereits empfangen wurde, unter Addieren der Bytes der geänderten Rahmen, die von dem Rechner (4, 4a, 4b) bereits empfangen wurden,
- mit, falls die Anzahl von Bytes, die bereits empfangen wurde, gleich der Anzahl transportierter Bytes ist, Bestimmen, dass die bereits empfangenen geänderten Rahmen die vollständige Schreibanforderung (Req TD) enthalten, und, wenn das der Fall ist, Ausführen des Schreibens in den Speicher des Rechners (4, 4a, 4b) der Daten der Schreibanforderung (Req TD), oder
- falls, im Gegenteil, die Anzahl von Bytes, die bereits empfangen wurde, kleiner ist als die Gesamtanzahl von Bytes, die von der Schreibanforderung (Req TD) transportiert wird, Bestimmen, dass die empfangenen geänderten Rahmen nicht die gesamte Schreibanforderung (Req TD) enthalten, wobei in diesem Fall die Neuzusammensetzung der Schreibanforderung (Req TD) unter Warten auf die Ankunft neuer Rahmen fortgesetzt wird.

9. Verfahren nach einem der vorstehenden Ansprüche, wobei das zweite Netzwerk sowie der oder die Rechner an Bord eines Fahrzeugs sind, während das erste Netzwerk außerhalb des Fahrzeugs ist.

## Claims

1. A method for downloading write requests (Req TD) of applications software data into at least one memory of one or more computers (4, 4a, 4b), the write requests (Req TD) being transmitted to the computer(s) (4, 4a, 4b) in initial frames in a first local area network, then, after conversion into modified frames, in a second time-division multiplexing network having a plurality of communication channels, each channel being assigned to a computer (4, 4a, 4b), this second network being parameterised according to a repetitive communication cycle, this communication cycle including the sending of one modified frame per channel (4, 4a, 4b), **characterized in that**:
- for the conversion, the initial frames are segmented into modified frames, each containing a number of bytes less than or equal to a maximum number (Vmax) permissible by the channel associated with the computer in the second network;
- when, during the communication cycle, one or more free channels exist because the write requests intended for one or more computers are terminated, the free channels are reassigned to the remaining computer(s) in the course of downloading for sending additional modified frames,
- in the remaining computer(s) (4, 4a, 4b) the write request (Req TD) intended for it/them is recomposed by grouping of the modified frames and memory write of software data.

2. The method according to Claim 1, in which the second time-division multiplexing network is with bus communication, periodically shared during a cycle, between a static segment and a dynamic segment, the simultaneous sending of modified frames for the computer (s) (4, 4a, 4b) in the course of downloading only being possible in the dynamic segment.

3. The method according to Claim 1 or Claim 2, in which the number of computers is five.

4. The method according to any one of Claims 1 to 3, in which, when each computer (4, 4a, 4b) receives a modified frame, the identification is performed as to whether this frame finalizes a complete write request (Req TD) or as forming part of a write request (Req TD) which is not yet complete, this identification being followed, in the first case by a write of software data in the memory of the computer (4, 4a, 4b) and, in the second case, by a wait for modified frames which have not yet arrived at the computer (4, 4a, 4b) for the recomposition of the write request (Req TD) .

5. The method according to Claim 4, in which, during the conversion, the total number of bytes of each write request (Req TD) is measured for each computer, and as many modified frames are generated segmenting this write request as are needed to contain all the bytes of each write request (Req TD), the number of generated frames depending on the maximum number (Vmax) of bytes permissible per modified frame.

6. The method according to Claim 5, in which, during the recomposition of the write request (Req TD) in a computer (4, 4a, 4b), for each write request (Req TD) a comparison is performed between the total number of bytes of the write request (Req TD) as total of the expected data and the number of bytes of the modified frames having already been received and segmenting the write request (Req TD) as total of the received data and, if these two numbers of bytes are equal, it is deduced therefrom that the write request (Req TD) has been completely received by the computer and its memory write is performed, whereas if the expected total number of bytes of the write request (Req TD) is greater than the total number of bytes of the received modified frames, the recomposition of the write request (Req TD) is awaiting reception of new frames until the expected length is equal to the total number of bytes of the received modified frames.

7. The method according to Claim 4, in which there is emitted to each computer (4, 4a, 4b) which is to be downloaded, a first downloading request in which there is indicated the total number of bytes which are to be downloaded, the computer (4, 4a, 4b) indicating in return the predetermined maximum number (Max) of bytes by the write request (Req TD) transmitted by an equipment tool (1).

8. The method according to Claim 7, in which, for each write request (Req TD) associated with a computer (4, 4a, 4b), there is carried out:
- the calculation of a number of bytes remaining to be received,
- the calculation of a number of bytes transported as being the minimum between the number of bytes remaining to be received and the predetermined maximum number (Max) of bytes per write request (Req TD),
- the comparison of the number of bytes transported per write request (Req TD) with the number of bytes already received, adding the bytes of the modified frames already received by the computer (4, 4a, 4b),
- with, if the number of bytes already received is equal to the number of transported bytes, determination that the modified bytes already received contain the whole of the write request (Req TD), in which case there is carried out the write in the memory of the computer (4, 4a, 4b) of the data of the write request (Req TD), or
- if, on the contrary, the number of bytes already received is less than the total number of bytes transported by the write request (Req TD), determination that the received modified frames do not contain the whole of the write request (Req TD), in which case the recomposition of the write request (Req TD) is continued awaiting the arrival of new frames.

9. The method according to any one of the preceding claims, the second network and the computer(s) being on board in a vehicle, whereas the first network is outside the vehicle.
